# EUROPEAN PATENT APPLICATION

(11) **EP 4 567 944 A1**
(43) Date of publication of application: **11.06.2025**
(21) Application number: 23849880.2
(22) Date of filing: 18.07.2023
(51) Int. Cl.: H01M 8/18, H01M 8/04

(54) **REDOX FLOW BATTERY**

(30) Priority: 04.08.2022 JP 2022125091
(71) Applicant: SUMITOMO ELECTRIC INDUSTRIES, LTD., Osaka-shi, Osaka 541-0041 (JP)
(72) Inventor: HAYASHI, Kiyoaki, Osaka-shi, Osaka 541-0041 (JP); MORIGAMI, Kenta, Osaka-shi, Osaka 541-0041 (JP)
(74) Representative: Müller-Boré & Partner Patentanwälte PartG mbB
(86) International application number: PCT/JP2023/026209
(87) International publication number: WO 2024/029322

(57) **Abstract**

A redox flow battery comprises: a battery cell; a tank with an electrolyte stored therein; a pipe that interconnects the tank and the battery cell; and a pump provided at the pipe, wherein the battery cell and the pump are disposed at a level higher than the tank, the redox flow battery has a supply port for introducing a gas into the pipe, and the pipe is provided such that the electrolyte is held in a suction port of the pump when the pump is stopped.

## Description

### TECHNICAL FIELD

The present disclosure relates to a redox flow battery. The present application claims priority to Japanese Patent Application No. 2022-125091 filed on August 4, 2022. The entire contents of the Japanese Patent Application are hereby incorporated by reference.

### BACKGROUND ART

PTLs 1 and 2 disclose redox flow batteries. The redox flow battery comprises a cell, an electrolyte tank, and a circulation mechanism that circulates the electrolyte between the cell and the electrolyte tank. The circulation mechanism comprises a suction pipe to draw in the electrolyte from the electrolyte tank, a circulation pump provided at the suction pipe, a supply pipe connecting from a discharge port of the circulation pump to the cell, and a return pipe connecting from the cell to the electrolyte tank. The redox flow battery has the circulation pump and the cell disposed above the electrolyte tank. The circulation pump comprises a priming tank disposed between the body of the pump and the suction pipe.

### CITATION LIST

### PATENT LITERATURE

PTL 1: WO2019/106721
PTL 2: WO2019/106722

### SUMMARY OF INVENTION

The presently disclosed redox flow battery comprises:
a battery cell;
a tank with an electrolyte stored therein;
a pipe that interconnects the tank and the battery cell; and
a pump provided at the pipe, wherein
the battery cell and the pump are disposed at a level higher than the tank,
the redox flow battery has a supply port for introducing a gas into the pipe, and
the pipe is provided such that the electrolyte is held in a suction port of the pump when the pump is stopped.

### BRIEF DESCRIPTION OF DRAWINGS

Fig. 1 is a schematic diagram showing a basic configuration of a redox flow battery.
Fig. 2 is a schematic diagram showing a configuration of a redox flow battery according to a first embodiment.
Fig. 3 is a schematic diagram for illustrating a state immediately after a pump that the redox flow battery according to the first embodiment comprises is stopped.
Fig. 4 is a schematic diagram for illustrating an intermediate state of introducing a gas through a supply port that the redox flow battery according to the first embodiment comprises.
Fig. 5 is a schematic diagram for illustrating a state in which the introduction of the gas through the supply port that the redox flow battery according to the first embodiment comprises is completed.
Fig. 6 is a schematic diagram showing a configuration of a redox flow battery according to a second embodiment.
Fig. 7 is a schematic diagram showing a configuration of a redox flow battery according to a third embodiment.

### DETAILED DESCRIPTION

### [Problem to be Solved by the Present Disclosure]

When the redox flow batteries described in PTLs 1 and 2 draw in the electrolyte from the electrolyte tank by the circulation pump, the redox flow batteries can supply the electrolyte stored in a priming tank to a suction port of the circulation pump to actuate the circulation pump. Conventional redox flow batteries require a priming tank to actuate the circulation pump, and cannot avoid an increase in weight, space for installation, and cost due to the priming tank.

An object of the present disclosure is to provide a redox flow battery that can dispense with a priming tank and can be reduced in weight, space for installation, and cost.

### [Advantageous Effect of the Present Disclosure]

The presently disclosed redox flow battery can dispense with a priming tank and can be reduced in weight and cost.

### [Description of Embodiments of the Present Disclosure]

Initially, embodiments of the present disclosure will be listed and described.
(1) A redox flow battery according to an embodiment of the present disclosure comprises:
   a battery cell;
   a tank with an electrolyte stored therein;
   a pipe that interconnects the tank and the battery cell; and
   a pump provided at the pipe, wherein
   the battery cell and the pump are disposed at a level higher than the tank,
   the redox flow battery has a supply port for introducing a gas into the pipe, and
   the pipe is provided such that the electrolyte is held in a suction port of the pump when the pump is stopped.

The presently disclosed redox flow battery dispenses with a priming tank. The presently disclosed redox flow battery allows the electrolyte held in the suction port of the pump to provide priming and can thus actuate the pump. The presently disclosed redox flow battery without a priming tank can be reduced in weight, space for installation, and cost.

When the pump is stopped, a gas can be introduced into the pipe through the supply port to remove the electrolyte in the battery cell. This can suppress self-discharging of the electrolyte otherwise remaining in the battery cell.

(2) The redox flow battery according to item (1) above, wherein
the pipe may include
   a first pipe that is a flow channel for the electrolyte from the tank toward the battery cell, and
   a second pipe that is a flow channel for the electrolyte from the battery cell toward the tank,
the pump may be provided at the first pipe,
the first pipe may include
   a first portion inserted into the electrolyte in the tank,
   a second portion connected to the battery cell, and
   a third portion located at a highest level of the first pipe, and
the supply port may be provided at the second portion of the first pipe or the second pipe.

The configuration according to item (2) above allows the electrolyte to be held in the suction port of the pump even when the pump is stopped.

(3) The redox flow battery according to item (2) above, wherein
the supply port may be provided at the second pipe.

The configuration according to item (3) above facilitates ensuring that the electrolyte is sufficiently held in the first pipe when the pump is stopped. This configuration helps to hold the electrolyte in the suction port of the pump.

(4) The redox flow battery according to item (2) or (3) above, wherein
the pump may be provided between the first portion and the third portion, at the second portion, or at the third portion.

The configuration according to item (4) above allows the pump to be repositioned, as appropriate.

### [Details of Embodiments of the Present Disclosure]

Hereinafter, specific examples of a redox flow battery according to embodiments of the present disclosure will be described with reference to the drawings. In the figures, identical or equivalent components are identically denoted.
Hereinafter, the redox flow battery may be referred to as an "RF battery".

It should be noted that the present invention is not limited to these examples; rather, it is defined by the terms of the claims and intended to encompass any modifications within the meaning and scope equivalent to the terms of the claims.

### <Basic Configuration of RF Battery>

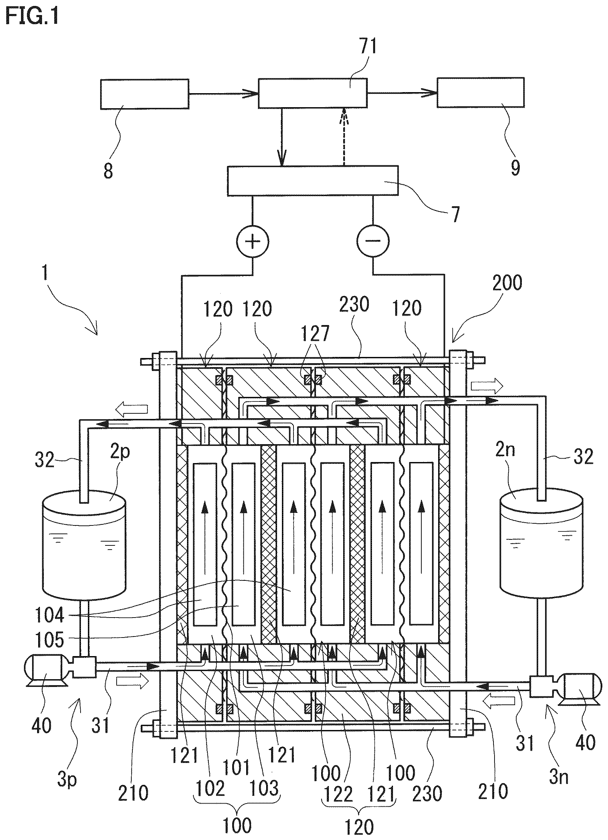

A basic configuration of an RF battery 1 will be described with reference to Fig. 1. RF battery 1 is a secondary battery of an electrolyte circulation type. RF battery 1 is electrically charged and discharged by utilizing a difference between a redox potential of a positive electrode active material contained in a positive electrolyte and a redox potential of a negative electrode active material contained in a negative electrolyte.

The electrolyte can be a known electrolyte. The positive electrolyte includes a positive electrode active material. The positive electrode active material is, for example, one or more types selected from the group consisting of manganese ions, vanadium ions, iron ions, polyacids, quinone derivatives, and amines. The negative electrolyte includes a negative electrode active material. The negative electrode active material is, for example, one or more types selected from the group consisting of titanium ions, vanadium ions, chromium ions, polyacids, quinone derivatives, and amines. As a specific example of the electrolyte, the positive electrolyte and the negative electrolyte both include vanadium ions. As another example of the electrolyte, the positive electrolyte includes manganese ions and the negative electrolyte includes titanium ions. A solvent for the positive and negative electrolytes is, for example, an aqueous solution containing one or more acids selected from the group consisting of sulfuric acid, phosphoric acid, nitric acid, and hydrochloric acid, or an acidic salt thereof.

RF battery 1 is typically connected to a power generation unit 8 and a load 9 via an AC/DC converter 7 and a transformer facility 71. RF battery 1 can be charged with power generated by power generation unit 8 and discharge the charged power to load 9. Power generation unit 8 is a power generation facility utilizing natural energy such as solar power generation, wind power generation or the like, or other general power plants. RF battery 1 is used for example for load leveling, instantaneous voltage drop compensation, emergency power source and the like, and for smoothing an output of natural energy power generation.

RF battery 1 comprises a battery cell 100, tanks 2p and 2n in which an electrolyte is stored, pipes 3p and 3n connecting tanks 2p and 2n to battery cell 100, and a pump 40 provided at each of pipes 3p and 3n. Tank 2p stores a positive electrolyte. Tank 2n stores a negative electrolyte. The positive electrolyte circulates between tank 2p and battery cell 100 through pipe 3p. The negative electrolyte circulates between tank 2n and battery cell 100 through pipe 3n.

### (Battery Cell)

Battery cell 100 comprises a positive electrode 104, a negative electrode 105, and a membrane 101. Membrane 101 is disposed between positive electrode 104 and negative electrode 105. Battery cell 100 is divided into a positive electrode cell 102 and a negative electrode cell 103 by membrane 101. Positive electrode 104 is disposed in positive electrode cell 102. Negative electrode 105 is disposed in negative electrode cell 103. Positive electrode cell 102 is supplied with the positive electrolyte. Negative electrode cell 103 is supplied with the negative electrolyte. Battery cell 100 can be configured as known, as appropriate.

Pipes 3p and 3n are identical in configuration. Pipes 3p and 3n each include a first pipe 31 and a second pipe 32. Pump 40 is provided at first pipe 31. Pump 40 circulates the electrolyte in tanks 2p and 2n to battery cell 100. Pipe 3p has first pipe 31 to send the positive electrolyte from tank 2p to battery cell 100. Pipe 3p has second pipe 32 to return the positive electrolyte from battery cell 100 to tank 2p. That is, the positive electrolyte is supplied from tank 2p to positive electrode cell 102 through first pipe 31. Positive electrode cell 102 discharges the positive electrolyte, which is returned to tank 2p through second pipe 32. Pipe 3n has first pipe 31 to send the negative electrolyte from tank 2n to battery cell 100. Pipe 3n has second pipe 32 to return the negative electrolyte from battery cell 100 to tank 2n. That is, the negative electrolyte is supplied from tank 2n to negative electrode cell 103 through first pipe 31. Negative electrode cell 103 discharges the negative electrolyte, which is returned to tank 2n through second pipe 32. When charging or discharging is performed, the electrolyte is circulated by pump 40. When neither charging nor discharging is performed, pump 40 is stopped and the electrolyte is not circulated.

RF battery 1 may be configured to comprise a single battery cell 100 or may be configured to comprise a plurality of battery cells 100. The present embodiment comprises a cell stack 200 having a plurality of battery cells 100 stacked together, as shown in Fig. 1. Cell stack 200 is composed of a cell frame 120, positive electrode 104, membrane 101, and negative electrode 105 successively deposited repeatedly. End plates 210 are disposed at opposite ends of cell stack 200. Components between end plates 210 are clamped together by a clamping member 230 to integrate cell stack 200. Cell stack 200 can be configured as known, as appropriate.

Cell frame 120 includes a bipolar plate 121 and a frame member 122. Bipolar plate 121 is disposed between positive electrode 104 and negative electrode 105. Frame member 122 surrounds bipolar plate 121. A recess is formed inside frame member 122 by bipolar plate 121 and frame member 122. The recess is provided on each of opposite sides of bipolar plate 121. In each recess are accommodated positive electrode 104 and negative electrode 105 with bipolar plate 121 interposed therebetween.

As shown in Fig. 1, positive electrode 104 and negative electrode 105 are disposed between bipolar plates 121 of adjacent cell frames 120 with membrane 101 interposed therebetween to form a single battery cell 100. An annular seal member 127, for example, is disposed between frame members 122 of cell frames 120. The number of battery cells 100 stacked in cell stack 200 can be selected as appropriate.

Although not shown, frame member 122 has a liquid supply manifold for supplying each electrolyte and a liquid drainage manifold for draining each electrolyte. Each manifold penetrates frame member 122, and cell frames 120 are stacked in layers to configure a flow channel for each electrolyte. Each flow channel is connected to first and second pipes 31 and 32.

### [First Embodiment]

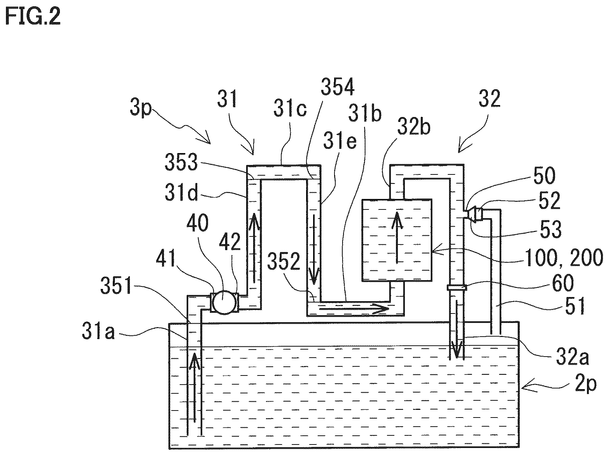

RF battery 1 according to the first embodiment will now be described with reference to Fig. 2. Of pipes 3p and 3n shown in Fig. 1, pipe 3p is configured as shown in Fig. 2. A specific configuration of pipe 3p will now be described. Pipe 3n is neither described nor shown as it is similar in configuration to pipe 3p.

RF battery 1 according to the first embodiment has battery cell 100 and pump 40 disposed at a level higher than tank 2p, as shown in Fig. 2. RF battery 1 having battery cell 100 and pump 40 disposed at a level higher than tank 2p has battery cell 100 and pump 40 disposed at a level higher than a liquid level of the electrolyte stored in tank 2p. Battery cell 100 is composed of cell stack 200. Although not shown, a cell chamber is disposed above tank 2p for accommodating battery cell 100. Pipe 3p including pump 40 is also accommodated in the cell chamber. The cell chamber and tank 2p are each a container.

### (First Pipe)

Pipe 3p has first pipe 31 as a flow channel for the electrolyte from tank 2p toward battery cell 100. The electrolyte in tank 2p is supplied to battery cell 100 through first pipe 31. First pipe 31 includes a first portion 31a, a second portion 31b, and a third portion 31c. First pipe 31 of the present embodiment further includes a first intermediate portion 31d and a second intermediate portion 31e. First portion 31a is a portion located in tank 2p. First portion 31a includes a portion inserted into the electrolyte in tank 2p. First portion 31a has an open end located in the electrolyte. Second portion 31b is a portion connected to battery cell 100. Second portion 31b is a portion that includes an end portion connected to battery cell 100 and has a length of an extent. Second portion 31b of the present embodiment is located at a level lower than a lower surface of battery cell 100. Third portion 31c is a portion of first pipe 31 located at a level highest of first pipe 31. Third portion 31c is located at a level higher than first and second portions 31a and 31b. From another viewpoint, third portion 31c is a portion of first pipe 31 located at a level highest of first pipe 31, and will thus be a portion of first pipe 31 located at a level higher than first and second portions 31a and 31b. Third portion 31c is located between first and second portions 31a and 31b. First intermediate portion 31d is a portion interconnecting first portion 31a and third portion 31c. Second intermediate portion 31e is a portion interconnecting second portion 31b and third portion 31c. These portions are located in the order of first portion 31a, first intermediate portion 31d, third portion 31c, second intermediate portion 31e, and second portion 31b from tank 2p toward battery cell 100. In Fig. 2, a boundary 351 between first portion 31a and first intermediate portion 31d, a boundary 352 between second portion 31b and second intermediate portion 31e, a boundary 353 between third portion 31c and first intermediate portion 31d, and a boundary 354 between third portion 31c and second intermediate portion 31e are indicated by a thin solid line.

First portion 31a has an open end located at a level lower than the liquid level of the electrolyte and thus opens in the electrolyte. First portion 31a of the present embodiment extends to an upper portion of tank 2p. Second portion 31b of the present embodiment has an end portion connected to a lower portion of battery cell 100. Second portion 31b is located at a level higher than tank 2p. Second portion 31b located at a level lower than a reactive portion of battery cell 100 suffices.
Second portion 31b may have the end portion connected to a portion below a lower end of the reactive portion. The reactive portion of battery cell 100 is a portion in which an electrode is disposed. Specifically, the reactive portion is a portion provided with positive electrode cell 102 shown in Fig. 1.

In the present embodiment, as shown in Fig. 2, first portion 31a is formed of a vertical pipe extending in the vertical direction. Second portion 31b is composed of a vertical pipe extending downward from battery cell 100 and a horizontal pipe extending horizontally from a lower end portion of the vertical pipe. That is, second portion 31b is an L-shaped portion. Third portion 31c is located at a level higher than an upper surface of battery cell 100. Third portion 31c is formed of a horizontal pipe. First intermediate portion 31d is located between first portion 31a and third portion 31c. First intermediate portion 31d includes a short vertical pipe coupled to first portion 31a, a horizontal pipe extending horizontally from an upper end portion of the vertical pipe, and a long vertical pipe interconnecting the horizontal pipe and third portion 31c. In Fig. 2, first intermediate portion 31d has the horizontal pipe extending in a lateral direction so as to interconnect the two vertical pipes. Second intermediate portion 31e is located between second portion 31b and third portion 31c. Second intermediate portion 31e is formed of a vertical pipe. The horizontal pipe of second portion 31b is coupled to a lower end portion of second intermediate portion 31e. Third portion 31c, first intermediate portion 31d, and second intermediate portion 31e are coupled together in an inverted U-shape.

### (Second Pipe)

Pipe 3p has second pipe 32 as a flow channel for the electrolyte from battery cell 100 toward tank 2p. Battery cell 100 discharges the electrolyte, which is returned to tank 2p through second pipe 32. Second pipe 32 has a first end portion 32a and a second end portion 32b. First end portion 32a is a portion located in tank 2p. In the present embodiment, first end portion 32a has an open end located at a level lower than the liquid level of the electrolyte and thus opens in the electrolyte. First end portion 32a may have the open end located at a level higher than the liquid level of the electrolyte and may thus open in a gas phase. Second end portion 32b is connected to an upper portion of battery cell 100. Second end portion 32b located at a level higher than the reactive portion of battery cell 100 suffices, and the second end portion may be connected to a portion above an upper end of the reactive portion.

Pipe 3p may be formed of any material of resin, rubber, glass, metal, etc. When pipe 3p is made of metal, pipe 3p may have its internal surface coated with resin in order to prevent corrosion caused as the electrolyte comes into contact with the pipe. When pipe 3p is made of transparent resin or glass, it allows a state of the electrolyte therein to be externally, visually observed. The transparent resin is, for example, a vinyl chloride resin. Further, pipe 3p may be provided with a window. When the window is made of a transparent resin or glass, it allows a state of the electrolyte to be visually observed therethrough.

### (Pump)

Pump 40 pumps up the electrolyte from tank 2p and sends the electrolyte to battery cell 100 through first pipe 31. Pump 40 is a self-priming pump. In the present embodiment, pump 40 is provided between first portion 31a of first pipe 31 and third portion 31c. Specifically, pump 40 is disposed at an intermediate portion of the horizontal pipe of first intermediate portion 31d.

Fig. 2 shows a state while the RF battery is in operation. While the RF battery is in operation, pump 40 is driven to circulate the electrolyte between tank 2p and battery cell 100. A solid arrow indicated in Fig. 2 indicates a flow of the electrolyte. A direction in which the electrolyte flows as pump 40 is driven is a downstream direction, and a direction opposite thereto is an upstream direction. Specifically, a direction indicated in Fig. 2 by the solid arrow is the downstream direction, and a direction opposite thereto is the upstream direction. The electrolyte in tank 2p is pumped up by pump 40 from first portion 31a and returned to tank 2p through first pipe 31, battery cell 100, and second pipe 32. While the RF battery is in operation, first pipe 31, battery cell 100, and second pipe 32 are filled with the electrolyte.

### (Supply Port)

As illustrated in Fig. 2, the RF battery according to the first embodiment has a supply port 50 for introducing a gas into pipe 3p. In the present embodiment, supply port 50 is provided at second pipe 32. Specifically, supply port 50 is provided at a portion located outside tank 2p between first end portion 32a and second end portion 32b. Supply port 50 communicates with the gas phase in tank 2p through a gas pipe 51. This allows the gas introduced in the gas phase in tank 2p to be introduced into pipe 3p through supply port 50. Gas pipe 51 may be connected to a gas supply source provided outside tank 2p. The gas is a non-oxidizing gas such as nitrogen gas. Supply port 50 functions to break a siphon that is formed in first pipe 31 by the gas introduced into pipe 3p when pump 40 is stopped. Note that "breaking a siphon" as referred to herein refers to dividing the electrolyte in the siphon that is formed in first pipe 31 upstream and downstream of third portion 31c. Upstream of third portion 31c is a left side of third portion 31c in Fig. 2. Downstream of third portion 31c is a right side of third portion 31c in Fig. 2. Supply port 50 functions, as will be described hereinafter. Supply port 50 may be provided at second portion 31b of first pipe 31.

### <Opening Diameter>

Supply port 50 has an opening diameter for example of 1 mm or more and 50 mm or less. The opening diameter of supply port 50 means the diameter of a circle equivalent to the opening area of supply port 50. The flow rate of the gas introduced through supply port 50 can be controlled by the opening diameter of supply port 50. When supply port 50 has a small opening diameter, it reduces the flow rate of the gas. When supply port 50 has a larger opening diameter, it increases the flow rate of the gas. Supply port 50 has an opening diameter in the above range for a ground described hereinafter.

### <Check Valve>

Supply port 50 may be provided with a check valve 52. Check valve 52 prevents the electrolyte in second pipe 32 from flowing into gas pipe 51. Check valve 52 may be of any type, such as a ball type or a swing type.

An orifice 53 may be provided at a connection portion between supply port 50 and check valve 52. The flow rate of the gas can be adjusted by changing the opening diameter of supply port 50 by orifice 53. The flow rate of the gas can also be adjusted, for example, by changing the diameter of gas pipe 51 and the degree of opening of check valve 52. A regulating valve for regulating the flow rate of the gas may be provided at an intermediate portion of gas pipe 51. The regulating valve is, for example, a ball valve or a needle valve.

While in the present embodiment supply port 50 is provided at a portion of second pipe 32 located outside tank 2p, supply port 50 may be provided at a portion of the second pipe located inside tank 2p. When second pipe 32 has first end portion 32a with the open end in the gas phase in tank 2p, the open end functions as supply port 50. When first end portion 32a has the open end in the electrolyte in tank 2p, supply port 50 may be provided through a sidewall of a portion of first end portion 32a located in the gas phase in tank 2p. Either case allows the gas to be introduced through supply port 50 when pump 40 is stopped. When supply port 50 is located in tank 2p, gas pipe 51 and check valve 52 are dispensed with.

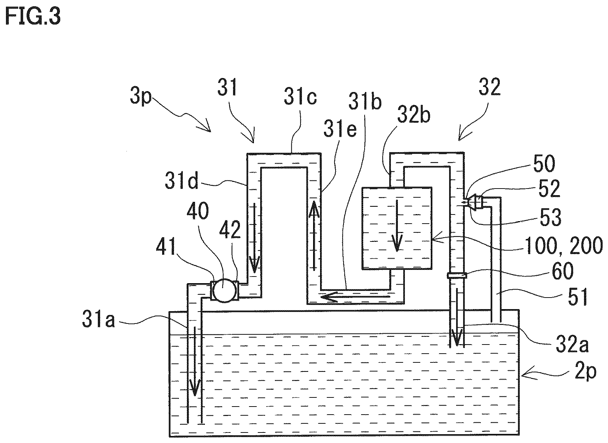

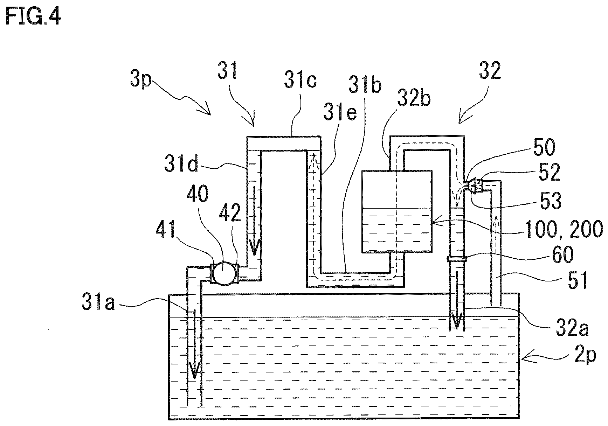

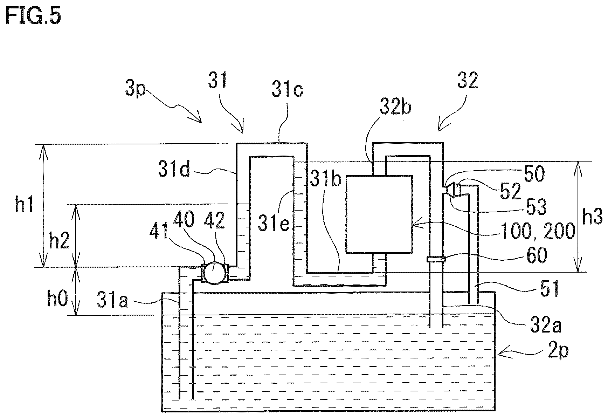

An operation when pump 40 is stopped will now be described with reference to Figs. 3 to 5. Fig. 3 shows a state immediately after pump 40 is stopped. In this state, first pipe 31, battery cell 100, and second pipe 32 are filled with the electrolyte. When pump 40 is stopped, a gas is introduced through supply port 50. When the gas is introduced through supply port 50, the electrolyte downstream of supply port 50 flows to tank 2p through second pipe 32 by gravity while the electrolyte is replaced with the gas. The electrolyte upstream of supply port 50 flows to first pipe 31 via battery cell 100 by the siphon principle. The electrolyte in first pipe 31 flows back through first pipe 31 and returns to tank 2p. When this is done, the gas introduced through supply port 50 is mixed into the electrolyte and flows toward first portion 31a. In Figs. 3 and 4, solid arrows represent how the electrolyte flows, and dotted arrows represent how the gas flows. As the electrolyte in battery cell 100 is replaced with the gas, the electrolyte is drained from battery cell 100, as shown in Fig. 4. As the electrolyte in first pipe 31 at third portion 31c is replaced with the gas, the gas accumulates in third portion 31c, as illustrated in Fig. 4. The gas accumulated in third portion 31c breaks the siphon formed in first pipe 31. As the siphon in first pipe 31 is broken at third portion 31c, the electrolyte upstream of third portion 31c and the electrolyte downstream of third portion 31c have their respective own weights balanced with each other, as shown in Fig. 5. Thus, the electrolyte is held in a region between third portion 31c and first portion 31a and a region between third portion 31c and second portion 31b. In Fig. 5, the electrolyte is held in first portion 31a and first intermediate portion 31d, as well as second portion 31b and second intermediate portion 31e. When second portion 31b is located at a level lower than battery cell 100, the electrolyte is hard to remain in battery cell 100.

While the RF battery is on standby, it is in the state as described above with reference to Fig. 5. In this state, the electrolyte fills between first portion 31a of first pipe 31 and third portion 31c, and the electrolyte is held in a suction port 41 and a discharge port 42 of pump 40. That is, pump 40 is internally filled with the electrolyte. In the standby state shown in Fig. 5, the electrolyte held in suction port 41 of pump 40 can be used as priming in actuating the pump. That is, pump 40 can be actuated from the standby state of the RF battery. Thus, the RF battery of the present embodiment dispenses with a priming tank. Further, as illustrated in Fig. 5, the electrolyte is drained from battery cell 100, and this can suppress self-discharging of the electrolyte otherwise remaining in battery cell 100.

When pump 40 is actuated from the standby state shown in Fig. 5, the electrolyte in tank 2p is pumped up from first portion 31a, and the electrolyte is returned to tank 2p through first pipe 31, battery cell 100, and second pipe 32. The gas in third portion 31c is pushed out by the electrolyte and flows to tank 2p through battery cell 100 and second pipe 32. When first pipe 31, battery cell 100, and second pipe 32 are filled with the electrolyte, the operative state shown in Fig. 2 is attained.

A relationship between a height h1 from pump 40 to third portion 31c and a height h0 from the liquid level of the electrolyte in tank 2p to pump 40 will be described with reference to Fig. 5. Height h1 is a height from an upper end of suction port 41 of pump 40 to the highest level of third portion 31c. Suction port 41 has the upper end at the highest level of suction port 41. Height h0 is a height from the liquid level of the electrolyte in tank 2p to the upper end of suction port 41 of pump 40. Height h1 is, for example, 1.05 or more and 3 or less times height h0. Height h1 that is 1.05 or more times height h0 allows the electrolyte to be sufficiently held in a region of first pipe 31 upstream of third portion 31c when pump 40 is stopped. Allowing the electrolyte to sufficiently fill between first portion 31a and third portion 31c facilitates holding the electrolyte in suction port 41 of pump 40. When height h1 is three or less times height h0, third portion 31c has a reduced level, and pipe 3p becomes compact. Such a pipe 3p is easily accommodated in the container configuring the cell chamber. Further, height h1 may be 1.1 or more and 3 or less times height h0. When height h1 is 2.5 or less, and furthermore, 2 or less times height h0, pipe 3p becomes more compact.

A relationship between height h2 from pump 40 to the liquid level of the electrolyte held in a region from pump 40 to third portion 31c and height h0 when pump 40 is stopped will now be described. Height h2 is a height from the upper end of suction port 41 of pump 40 to the liquid level. Specifically, the region from pump 40 to third portion 31c is first intermediate portion 31d. Specifically, height h2 is a height from the upper end of suction port 41 of pump 40 to the liquid level of the electrolyte held in first intermediate portion 31d. Height h2 is 0 or more. Height h2 is, for example, 0.05 or more times height h0. Height h2 that is 0.05 or more times height h0 ensures that the electrolyte is held in suction port 41 of pump 40 as the electrolyte sufficiently fills between first portion 31a and third portion 31c. Height h2 has an upper limit set to a value smaller than height h1. Further, height h2 may be 0.1 or more times height h0. Height h2 may be 0.05 or more and 1 or less times height h0 or may be 0.1 or more and 1 or less times height h0. When first pipe 31 is made of transparent resin or glass, or when first pipe 31 is provided with the above-described window, the liquid level of the electrolyte held in first pipe 31 can be externally observed.

When pump 40 is stopped, the height from the liquid level of the electrolyte in tank 2p to the liquid level of the electrolyte held in first intermediate portion 31d, that is, a total height of height h0 and height h2, is substantially equal to a height h3 of the liquid level of the electrolyte held in second intermediate portion 31e. This is because, as has been described above, as the siphon is broken at third portion 31c, the electrolyte upstream of third portion 31c and the electrolyte downstream of third portion 31c have their respective own weights balanced with each other. When height h2 is 0.05 or more times height h0, height h3 will be 1.05 or more times height h0. Height h3 is equal to or less than height h1.

As the flow rate of the gas introduced through supply port 50 when pump 40 is stopped increases, the period of time before the gas accumulates in third portion 31c decreases. That is, the period of time before the siphon formed in first pipe 31 is broken decreases. As the flow rate of the gas introduced through supply port 50 when pump 40 is stopped increases, the amount of the gas accumulated in third portion 31c increases, and the liquid level of the electrolyte held in first intermediate portion 31d may decrease. Supply port 50 having an opening diameter of 1 mm or more allows the introduced gas to break the siphon in a short period of time. Supply port 50 having an opening diameter of 50 mm or less facilitates ensuring height h2 sufficiently. This facilitates the electrolyte sufficiently filling between first portion 31a and third portion 31c, and accordingly, facilitates holding the electrolyte in suction port 41 of pump 40. Supply port 50 may have an opening diameter of 2 mm or more and 25 mm or less. When supply port 50 is provided at second pipe 32, as in the present embodiment, the gas introduced through supply port 50 flows to first pipe 31 through battery cell 100, as shown in Fig. 4. In that case, battery cell 100 increases resistance to the gas flowing to first pipe 31. Thus, it is believed that this causes an effect similar to that caused when supply port 50 has a reduced opening diameter.

After the RF battery is assembled, in an initial state in which the RF battery starts to operate, first pipe 31, battery cell 100 and second pipe 32 are not filled with the electrolyte. In this initial state, even if pump 40 is actuated, pump 40 idles and cannot pump up the electrolyte from tank 2p. Although not shown in detail, second pipe 32 is provided with a connection port for connecting a vacuum pump. The connection port is provided at a portion located outside tank 2p between first end portion 32a and second end portion 32b. First pipe 31, battery cell 100, and second pipe 32 are evacuated by the vacuum pump to draw the electrolyte from tank 2p through first pipe 31 and second pipe 32. First pipe 31 can thus be filled with the electrolyte.

As shown in Fig. 2, second pipe 32 may be provided with an interrupting valve 60. Interrupting valve 60 is located downstream of the connection port for the vacuum pump. In the initial state, interrupting valve 60 is closed to interrupt the flow channel of second pipe 32. First pipe 31, battery cell 100, and second pipe 32 are evacuated by the vacuum pump to draw the electrolyte from tank 2p through first pipe 31. First pipe 31 can thus be filled with the electrolyte. When second pipe 32 has first end portion 32a opened in the gas phase in tank 2p and interrupting valve 60 is not provided, the gas in the gas phase is drawn up through second pipe 32. By closing interrupting valve 60, the electrolyte can be drawn up through first pipe 31. When second pipe 32 has first end portion 32a opened in the electrolyte in tank 2p, interrupting valve 60 may be dispensed with.

Interrupting valve 60 may be of any type, such as a butterfly valve, a ball valve, a gate valve, etc.

### [Second Embodiment]

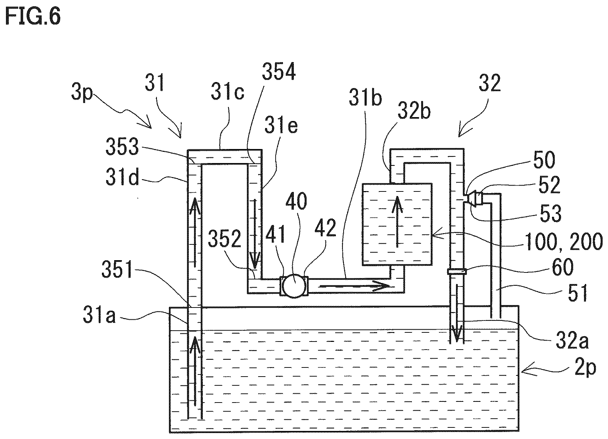

A configuration of an RF battery according to a second embodiment will now be described with reference to Fig. 6. The RF battery of the second embodiment differs from the RF battery of the first embodiment shown in Fig. 2 in the position of pump 40. Hereinafter, the difference from the first embodiment will be mainly described. Configuration common to the first embodiment will not be described.

In the second embodiment, pump 40 is provided at second portion 31b of first pipe 31. Specifically, pump 40 is disposed at an intermediate portion of the horizontal pipe of second portion 31b. In the second embodiment, first intermediate portion 31d is formed of a vertical pipe extending in the vertical direction. First portion 31a and first intermediate portion 31d are linearly coupled in the vertical direction.

### [Third Embodiment]

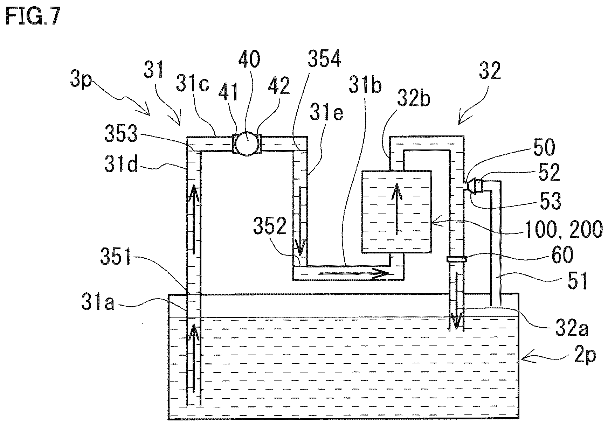

A configuration of an RF battery according to a third embodiment will now be described with reference to Fig. 7. The RF battery of the third embodiment differs from the RF battery of the first embodiment shown in Fig. 2 in the position of pump 40. Hereinafter, the difference from the first embodiment will be mainly described. Configuration common to the first and second embodiments will not be described.

In the third embodiment, pump 40 is provided at third portion 31c of first pipe 31. Specifically, pump 40 is disposed at an intermediate portion of the horizontal pipe of third portion 31c.

Either one of the configurations of the second and third embodiments shown in Figs. 6 and 7 dispenses with a priming tank, as well as the first embodiment shown in Fig. 2. When the first to third embodiments are compared, the first embodiment has a shorter length in piping from tank 2p to pump 40 than the second and third embodiments and is thus of low head. As a result, it can reduce pump loss. Further, when the first embodiment is compared with the third embodiment, the former is less likely to entrain air bubbles when actuating the pump and hence cause cavitation.

### REFERENCE SIGNS LIST

1 redox flow battery (RF battery), 7 AC/DC converter, 71 transformer facility, 8 power generation unit, 9 load, 2p, 2n tank, 3p, 3n pipe, 31 first pipe, 31a first portion, 31b second portion, 31c third portion, 31d first intermediate portion, 31e second intermediate portion, 32 second pipe, 32a first end portion, 32b second end portion, 351, 352, 353, 354 boundary, 40 pump, 41 suction port, 42 discharge port, 50 supply port, 51 gas pipe, 52 check valve, 53 orifice, 60 interrupting valve, 100 battery cell, 101 membrane, 102 positive electrode cell, 103 negative electrode cell, 104 positive electrode, 105 negative electrode, 120 cell frame, 121 bipolar plate, 122 frame member, 127 seal member, 200 cell stack, 210 end plate, 230 clamping member, h0, h1, h2, h3 height.

## Claims

1. A redox flow battery comprising:
a battery cell;
a tank with an electrolyte stored therein;
a pipe that interconnects the tank and the battery cell; and
a pump provided at the pipe, wherein
the battery cell and the pump are disposed at a level higher than the tank,
the redox flow battery has a supply port for introducing a gas into the pipe, and
the pipe is provided such that the electrolyte is held in a suction port of the pump when the pump is stopped.

2. The redox flow battery according to claim 1, wherein
the pipe includes
a first pipe that is a flow channel for the electrolyte from the tank toward the battery cell, and
a second pipe that is a flow channel for the electrolyte from the battery cell toward the tank,
the pump is provided at the first pipe,
the first pipe includes
a first portion inserted into the electrolyte in the tank,
a second portion connected to the battery cell, and
a third portion located at a highest level of the first pipe, and
the supply port is provided at the second portion of the first pipe or the second pipe.

3. The redox flow battery according to claim 2, wherein the supply port is provided at the second pipe.

4. The redox flow battery according to claim 2 or 3, wherein the pump is provided between the first portion and the third portion, at the second portion, or at the third portion.
